# EUROPEAN PATENT APPLICATION

(11) **EP 3 016 120 A1**
(43) Date of publication of application: **04.05.2016**
(21) Application number: 15191300.1
(22) Date of filing: 23.10.2015
(51) Int. Cl.: H01G 4/18, H01G 4/20, H01G 4/30, H01G 4/32

(54) **FILM CAPACITOR**

(30) Priority: 28.10.2014 JP 2014219193
(71) Applicant: Toyota Jidosha Kabushiki Kaisha, Toyota-shi, Aichi-ken 471-8571 (JP)
(72) Inventor: HASE, Kohei, Aichi-ken, 471-8571 (JP); SAITO, Takahiro, Aichi-ken, 471-8571 (JP)
(74) Representative: Smith, Samuel Leonard

(57) **Abstract**

A film capacitor is formed by stacking metalized films. In each metalized film, a metal electrode (2a, 2b; 2aA, 2bA; 2aB, 2bB) is formed on a surface of a dielectric film (1a, 1b; 1aA, 1bA; 1aB, 1bB). The dielectric film (1a, 1b; 1aA, 1bA; 1aB, 1bB) includes a high dielectric layer (3a, 3b; 3aA, 3bA; 3aB, 3bB), and a low dielectric layer (4a, 4b; 4aA, 4bA; 4aaB, 4baB, 4abB, 4bbB). The low dielectric layer (4a, 4b; 4aA, 4bA; 4aaB, 4baB, 4abB, 4bbB) is provided in at least one of a position between the high dielectric layer (3a, 3b; 3aA, 3bA; 3aB, 3bB) and the metal electrode (2a, 2b; 2aA, 2bA; 2aB, 2bB), and a position on an opposite side of the high dielectric layer (3a, 3b; 3aA, 3bA; 3aB, 3bB) from the metal electrode (2a, 2b; 2aA, 2bA; 2aB, 2bB).

## Description

### BACKGROUND OF THE INVENTION

### 1. Field of the Invention

The invention relates to a film capacitor, and more particularly, to a film capacitor having excellent electrical characteristics.

### 2. Description of Related Art

Conventionally, metalized film capacitors (which are also referred to as metal vapor deposition electrode-type capacitors) that are obtained by vapor-depositing a metal such as aluminum on the surfaces of dielectric films made of polypropylene or the like have electrical characteristics of high withstand voltage and low loss, and hence are employed in various industrial fields such as home appliance industry and automotive industry.

In recent years, film capacitors including dielectric films having high electric permittivity, which contain VdF-based polymer, barium titanate-based particles or the like, have been developed with a view to greatly changing the capacitance of the capacitors themselves. This kind of conventional art is disclosed in Japanese Patent Application Publication No. 2009-277866 (JP 2009-277866 A).

The film capacitor disclosed in Japanese Patent Application Publication No. 2009-277866 (JP 2009-277866 A) is a film capacitor that is formed by winding or stacking metalized films each having a metal film formed on the surface of a film body. The film body is made of a material having higher electric permittivity than that of polyvinylidene fluoride (PVDF), and is adjusted such that the thickness of an air layer formed between the metalized films becomes equal to a predetermined thickness that makes it possible to obtain a desired capacitance.

A dielectric film that is employed in this kind of film capacitor is generally produced by applying a polymer solution onto a base material and drying the polymer solution. It is therefore known that asperities resulting from surface roughness are formed on the surface (the dried surface) of the dielectric film although the surface thereof at the base material side is substantially smooth. Therefore, in the case of the film capacitor, when the metalized films are wound or stacked to produce the film capacitor, an air gap may be generated between the metalized films adjacent to each other (concretely, between the surface of a metal film (a metal electrode) that is formed on the surface (the dried surface) of the dielectric film of one metalized film and the reverse surface (the surface at the base material side) of the dielectric film of another metalized film adjacent to the one metalized film) as a result of the surface roughness of the dielectric film. In particular, the dielectric film having high electric permittivity, which contains barium titanate-based particles or the like, is higher in degree of hardness and greater in surface roughness than a dielectric film that does not contain the aforementioned particles. Therefore, an air gap is likely to remain between the metalized films adjacent to each other, and a desired capacitance cannot be ensured.

If the dielectric film is subjected to smoothing treatment to reduce the surface roughness thereof with a view to coping with the aforementioned problem, the durability of the film capacity may decrease.

### SUMMARY OF THE INVENTION

The invention provides a film capacitor that includes a dielectric film having high electric permittivity and containing barium titanate-based particles or the like, and that can ensure a desired capacitance with a simple configuration.

An aspect of the invention relates to a film capacitor including metalized films in each of which a metal electrode is formed on a surface of a dielectric film, the metalized films being stacked in a thickness direction. The dielectric film includes a high dielectric layer that has a relatively high content of a high dielectric filler, and a low dielectric layer that has a relatively low content of the high dielectric filler or that does not contain the high dielectric filler. The low dielectric layer is provided in at least one of a position between the high dielectric layer and the metal electrode, and a position on an opposite side of the high dielectric layer from the metal electrode.

An aspect of the invention relates to a film capacitor that is formed by stacking metalized films in a thickness direction, wherein in each of the metalized films, a metal electrode is formed on a surface of a dielectric film. The dielectric film includes a high dielectric layer that has a relatively high content of a high dielectric filler, and a low dielectric layer that has a relatively low content of the high dielectric filler or that does not contain the high dielectric filler. The low dielectric layer is provided in at least one of a position between the high dielectric layer and the metal electrode, and a position on an opposite side of the high dielectric layer from the metal electrode.

Examples of a material for forming the dielectric film constituting the film capacitor according to the aforementioned aspect of the invention include paper, polyethylene terephthalate, polyethylene naphthalate, polypropylene, polyphenylene sulfide, polyvinylidene fluoride, polyetherimide, polyimide, and polyimide amide. The metal electrode that is formed on the surface of the dielectric film can be formed by arranging metal foil on the surface of the dielectric film or vapor-depositing an evaporated metal on the surface of the dielectric film. Examples of a material for forming the metal foil or the evaporated metal include metals such as aluminum (Al), zinc (Zn), tin (Sn), copper (Cu), iron (Fe), nickel (Ni), and chrome (Cr), and alloys of these metals. The evaporated metal can be formed by a vacuum film deposition method, for example, a vacuum evaporation method, a sputtering method, or a laser ablation method.

The high dielectric filler included in the dielectric film is a filler having electric permittivity higher than at least electric permittivity of the material forming the dielectric film. Examples of a material for forming the high dielectric filler include ceramic-based particles such as barium titanate-based particles and lead zirconate titanate-based particles. The high dielectric filler may further contain a coupling agent, a surfactant and the like.

Besides, the film capacitor according to the aforementioned aspect of the invention may be formed by superimposing a plurality of pairs of the metalized films on each other in the thickness direction or winding a pair of the metalized films around a winding core. In the case where the metalized films are wound around the winding core, the winding core may be a shaft-shaped core member having a predetermined cross-sectional shape or a hollow core.

In accordance with the film capacitor according to the aforementioned aspect of the invention, the low dielectric layer, which is relatively flexible, is provided in at least one of a position between the high dielectric layer and the metal electrode, and a position on the opposite side of the high dielectric layer from the metal electrode. Thus, when the film capacitor is produced by stacking the metalized films each including the dielectric film containing the high dielectric filler, it is possible to increase the contactability (the degree of contact) between the surface of the metal electrode formed on the surface of the dielectric film of one metalized film and the reverse surface of the dielectric film of another metalized film adjacent to the one metalized film, by employing the low dielectric layer. Therefore, it is possible to reduce the air gap generated between the metalized films adjacent to each other, and accordingly, it is possible to ensure a desired capacitance.

In the film capacitor according to the aforementioned aspect of the invention, the metal electrode may be provided on a surface of the high dielectric layer, and the low dielectric layer may be provided on another surface of the high dielectric layer on which the metal electrode is not provided.

According to the aforementioned configuration, when the film capacitor is produced by stacking the metalized films each including the dielectric film containing the high dielectric filler, the low dielectric layer that is provided in the reverse surface side of the dielectric film of one metalized film adjacent to another metalized film (in other words, the low dielectric layer that is provided on the opposite side of the high dielectric layer from the metal electrode, i.e., a contact portion that is in contact with the surface of the metal electrode that is formed on the surface of the dielectric film of the other metalized film) deforms along the asperities on the surface of the metal electrode that is formed on the surface of the dielectric film of the other metalized film (the asperities resulting from the surface roughness of the dielectric film). Thus, it is possible to increase the contactability (the degree of contact) between the surface of the metal electrode that is formed on the surface of the dielectric film of the other metalized film and the reverse surface of the dielectric film of the one metalized film adjacent to the other metalized film. Therefore, it is possible to more effectively reduce the air gap generated between the metalized films adjacent to each other, and accordingly, it is possible to more reliably ensure a desired capacitance.

As can be understood from the foregoing description, in the film capacitor according to the aforementioned aspect of the invention, the dielectric film includes the high dielectric layer that has a relatively high content of the high dielectric filler, and the low dielectric layer that has a relatively low content of the high dielectric filler or that does not contain the high dielectric filler. The low dielectric layer is provided in at least one of a position between the high dielectric layer and the metal electrode, and a position on the opposite side of the high dielectric layer from the metal electrode. Thus, a desired capacitance can be ensured with the simple configuration.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view showing the basic configuration of a film capacitor according to a first embodiment of the invention;
FIG. 2 is a longitudinal sectional view showing the internal configuration of the film capacitor shown in FIG. 1;
FIG. 3 is a longitudinal sectional view showing the internal configuration of a film capacitor according to a second embodiment of the invention;
FIG. 4 is a longitudinal sectional view showing the internal configuration of a film capacitor according to a third embodiment of the invention; and
FIG. 5 is a view showing a relationship between the thickness of a low dielectric layer of each film capacitor as a test specimen and the occurrence ratio of capacitance.

### DETAILED DESCRIPTION OF EMBODIMENTS

The embodiments of the invention will be described hereinafter with reference to the drawings. A mode in which (a stacked body of) a film capacitor is formed by superimposing a plurality of pairs of substantially rectangular metalized films on each other in a thickness direction will be mainly described hereinafter. However, (the stacked body of) this film capacitor may be formed by winding a pair of elongate metalized films around a winding core. In the case where the metalized films are wound around the winding core, the winding core may be a shaft-shaped core member having a predetermined cross-sectional shape or a hollow core that does not include a core member.

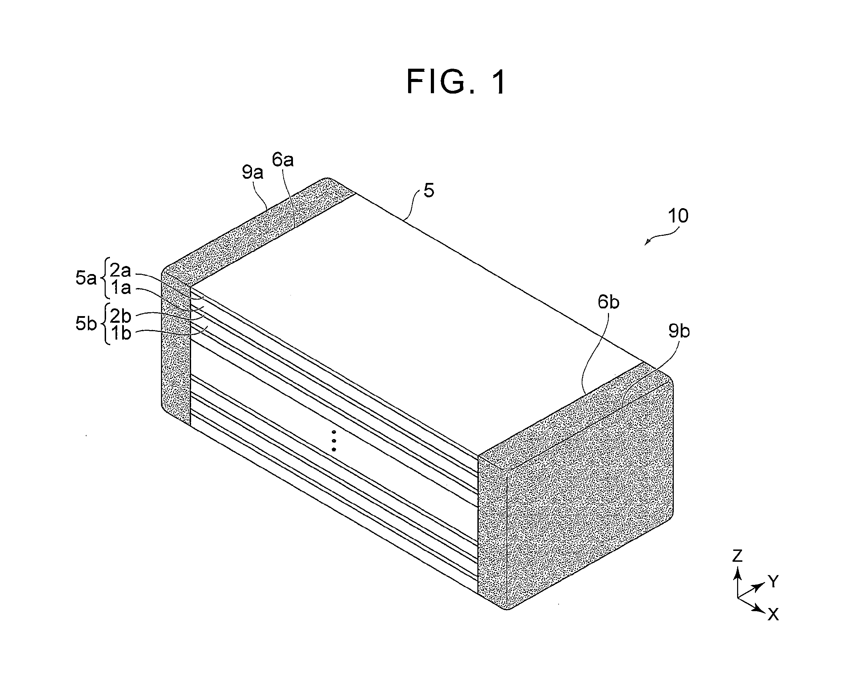

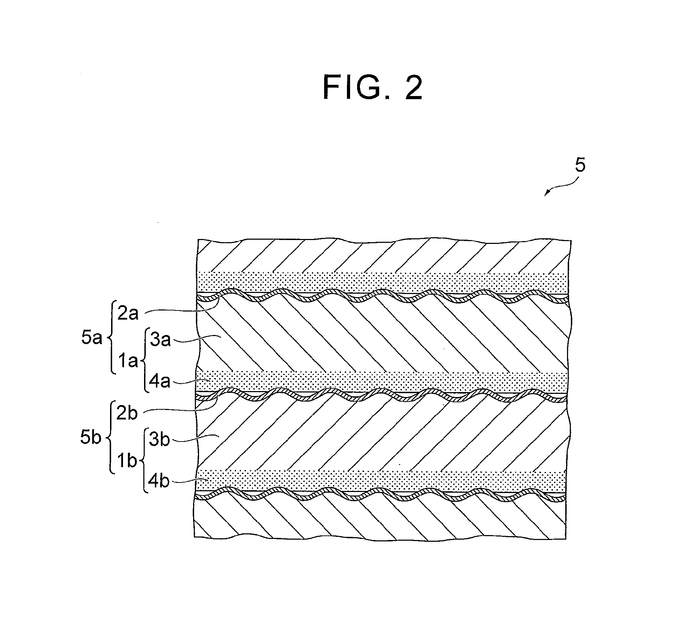

(First Embodiment) FIG. 1 is a perspective view showing the basic configuration of a film capacitor according to a first embodiment of the invention. FIG. 2 is a longitudinal sectional view showing the internal configuration of the film capacitor shown in FIG. 1. In FIG. 2, for the sake of easy understanding, the asperities of the surface of a dielectric film constituting the film capacitor (the asperities (unevenness) resulting from the surface roughness thereof) are shown in an emphasized manner (exaggerated manner).

A film capacitor 10 shown in the drawing mainly includes a substantially rectangular stacked body 5 and external electrodes 9a and 9b. The stacked body 5 is formed by stacking metalized films 5a and 5b, in which metal electrodes 2a and 2b are formed on the surfaces of substantially rectangular dielectric films 1a and 1b respectively, in a thickness direction (in a Z-direction in the drawing). The external electrodes 9a and 9b are respectively formed on both opposed lateral portions 6a and 6b of the stacked body 5 (which are opposed to each other in a lateral direction (an X-direction in the drawing) in the illustrated example).

The stacked body 5 is formed by superimposing a plurality of pairs of the metalized films 5a and 5b on each other in the thickness direction. In the metalized films 5a and 5b, the metal electrodes 2a and 2b in the form of films, which constitute internal electrodes, are respectively provided on the surfaces of a pair of dielectric films 1a and 1b each of which has a thickness of approximately several micro millimeters to several tens of micro millimeters. One of the metalized films 5a and 5b constitutes a positive electrode, and the other constitutes a negative electrode. The stacked body 5 is formed by alternately stacking the metalized films each constituting a positive electrode and the metalized films each constituting a negative electrode.

The external electrodes (which are also referred to as "metallikon electrodes" or metal-sprayed electrodes) 9a and 9b are formed by thermal-spraying a molten metal such as zinc onto both the lateral portions 6a and 6b of the stacked body 5 such that the molten metal adheres to the surfaces of both the lateral portions 6a and 6b.

Examples of a material for forming the dielectric films 1a and 1b include paper, polyethylene terephthalate, polyethylene naphthalate, polypropylene, polyphenylene sulfide, polyvinylidene fluoride, polyetherimide, polyimide, and polyimide amide. The metal electrodes 2a and 2b can be formed on the surfaces of the dielectric films 1a and 1b by arranging metal foil on each of the surfaces of the dielectric films 1a and 1b or vapor-depositing an evaporated metal on each of the surfaces of the dielectric films 1a and 1b. Examples of a material for forming the metal foil or the evaporated metal include metals such as aluminum (Al), zinc (Zn), tin (Sn), copper (Cu), iron (Fe), nickel (Ni), and chrome (Cr), and alloys of these metals. The evaporated metal can be formed by a vacuum film deposition method, for example, a vacuum evaporation method, a sputtering method, or a laser ablation method.

As shown in FIG. 2, each of the dielectric films 1a and 1b constituting the stacked body 5 includes a high dielectric layer 3a or 3b that has a relatively high content (a relatively high content percentage) of a high dielectric filler (i.e., the high dielectric layer 3a or 3b that has high electric permittivity), and a low dielectric layer 4a or 4b that has a relatively low content (a relatively low content percentage) of the high dielectric filler or that does not contain the high dielectric filler (i.e., the low dielectric layer 4a or 4b that has low electric permittivity). The low dielectric layer 4a or 4b is provided on an outermost surface of the high dielectric layer 3a or 3b, the outermost surface being located on the side opposite to the metal electrode 2a or 2b (in other words, the low dielectric layer 4a or 4b is provided on the opposite side of the high dielectric layer 3a or 3b from the metal electrode 2a or 2b, i.e., the low dielectric layer 4a or 4b is provided in the reverse surface side of the dielectric film 1a or 1b). That is, each of the dielectric films 1a and 1b has a double-layer structure consisting of the low dielectric layer 4a or 4b and the high dielectric layer 3a or 3b, which are arranged in this order from the reverse surface side (the side opposite to the metal electrode 2a or 2b formed on the surface of the dielectric film 1a or 1b).

The high dielectric filler included in each of the dielectric films 1a and 1b is a filler having electric permittivity higher than at least the electric permittivity of a material forming the dielectric films. Examples of the material forming the high dielectric filler include ceramic-based particles such as barium titanate-based particles and lead zirconate titanate-based particles. The high dielectric filler may further contain a coupling agent, a surfactant agent and the like.

In the film capacitor 10 configured as described above, a bus bar is attached to each of the external electrodes 9a and 9b through, for example, welding. The film capacitor 10 in this state is covered by a molding material made of epoxy resin or the like.

Thus, in the film capacitor 10 according to the first embodiment of the invention, each of the dielectric films 1a and 1b includes the high dielectric layer 3a or 3b that has a relatively high content of the high dielectric filler, and the low dielectric layer 4a or 4b that has a relatively low content of the high dielectric filler or that does not contain the high dielectric filler. The low dielectric layer 4a or 4b, which is relatively flexible, is provided on the outermost surface of the high dielectric layer 3a or 3b, the outermost surface being located on the side opposite to the metal electrode 2a or 2b (in other words, the low dielectric layer 4a or 4b is provided on the opposite side of the high dielectric layer 3a or 3b from the metal electrode 2a or 2b). Thus, when the metalized films 5a and 5b that include the dielectric films 1a and 1b containing the high dielectric filler are stacked to produce the film capacitor 10, the low dielectric layer 4a or 4b that is provided in the reverse surface side of the dielectric film 1a or 1b of the metalized film 5a or 5b adjacent to the other metalized film 5a or 5b (in other words, the low dielectric layer 4a or 4b that is provided on the opposite side of the high dielectric layer 3a or 3b from the metal electrode 2a or 2b, i.e., the low dielectric layer 4a or 4b that is provided in a contact portion that is in contact with the surface of the metal electrode 2b or 2a that is formed on the surface of the dielectric film 1b or 1a of the other metalized film 5b or 5a) deforms along the asperities (unevenness) of the surface of the metal electrode 2b or 2a that is formed on the surface of the dielectric film 1b or 1a of the other metalized film 5b or 5a (the asperities resulting from the surface roughness of the dielectric film 1b or 1a). Thus, it is possible to increase the contactability (the degree of contact) between the surface of the metal electrode 2b or 2a that is formed on the surface of the dielectric film 1b or 1a of the other metalized film 5b or 5a and the reverse surface of the dielectric film 1a or 1b of the metalized film 5a or 5b adjacent to the other metalized film 5b or 5a. Therefore, it is possible to reduce the air gap between the metalized films adjacent to each other, and accordingly, it is possible to ensure a desired capacitance.

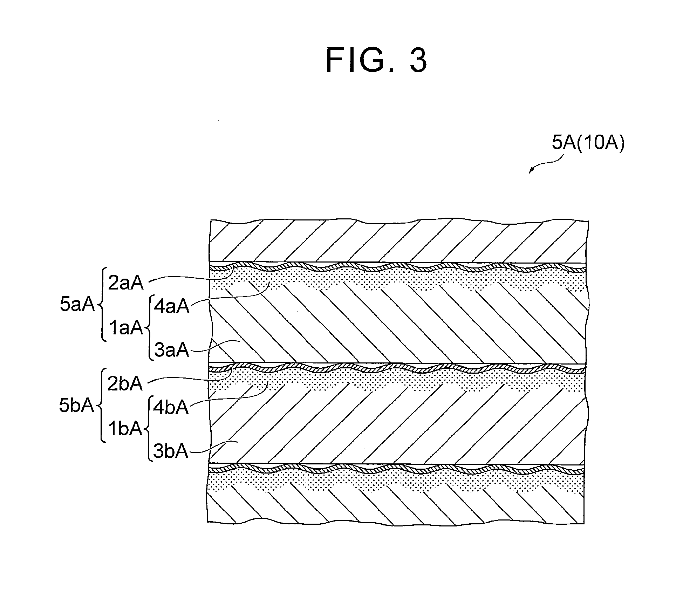

(Second Embodiment) FIG. 3 is a longitudinal sectional view showing the internal configuration of a film capacitor according to a second embodiment of the invention. A film capacitor 10A according to the second embodiment of the invention shown in FIG. 3 is different from the film capacitor 10 according to the first embodiment of the invention shown in FIGS. 1 and 2 in the internal structure of the dielectric films, and is substantially identical to the film capacitor 10 according to the first embodiment of the invention in other configurational details. Accordingly, detailed description of the configuration identical to that of the film capacitor 10 according to the first embodiment of the invention will be omitted.

In this second embodiment of the invention, each of dielectric films 1aA and 1bA constituting a stacked body 5A of the film capacitor 10A includes a high dielectric layer 3aA or 3bA that has a relatively high content (a relatively high content percentage) of a high dielectric filler (i.e., the high dielectric layer 3aA or 3bA that has high electric permittivity), and a low dielectric layer 4aA or 4bA that has a relatively low content (a relatively low content percentage) of the high dielectric filler or that does not contain the high dielectric filler (i.e., the low dielectric layer 4aA or 4bA that has low electric permittivity). The low dielectric layer 4aA or 4bA is provided between the high dielectric layer 3aA or 3bA and the metal electrode 2aA or 2bA (i.e., the low dielectric layer 4aA or 4bA is provided in the surface side of the dielectric film 1aA or 1bA). That is, each of the dielectric films 1aA and 1bA has a double-layer structure consisting of the high dielectric layer 3aA or 3bA and the low dielectric layer 4aA or 4bA, which are arranged in this order from the reverse surface side (the side opposite to the metal electrode 2aA or 2bA formed on the surface of the dielectric film 1aA or 1bA).

In this film capacitor 10A according to the second embodiment of the invention as well as the film capacitor 10 according to the first embodiment of the invention, when the metalized films 5aA and 5bA including the dielectric films 1aA and 1bA that contain the high dielectric filler are stacked to produce the film capacitor 10A, each of the relatively flexible low dielectric layers 4aA and 4bA that is interposed between the high dielectric layer 3aA or 3bA and the metal electrode 2aA or 2bA deforms. Thus, the metal electrode 2aA or 2bA that is formed on the surface (of the low dielectric layer 4aA or 4bA) of the dielectric film 1aA or 1bA of the metalized film 5aA or 5bA (i.e., the metal electrode 2aA or 2bA having asperities resulting from the surface roughness of the dielectric film 1b or 1a) deforms along the reverse surface of the dielectric film 1bA or 1aA of the adjacent metalized film 5bA or 5aA (i.e., the surface of the high dielectric layer 3bA or 3aA, the surface being located on the side opposite to the metal electrode 2bA or 2aA). Thus, it is possible to increase the contactability (the degree of contact) between the surface of the metal electrode 2aA or 2bA that is formed on the surface of the dielectric film 1aA or 1bA of the metalized film 5aA or 5bA and the reverse surface of the dielectric film 1bA or 1aA of the metalized film 5bA or 5aA adjacent to the metalized film 5aA or 5bA. Therefore, it is possible to reduce the air gap generated between the metalized films adjacent to each other, and accordingly, it is possible to ensure a desired capacitance.

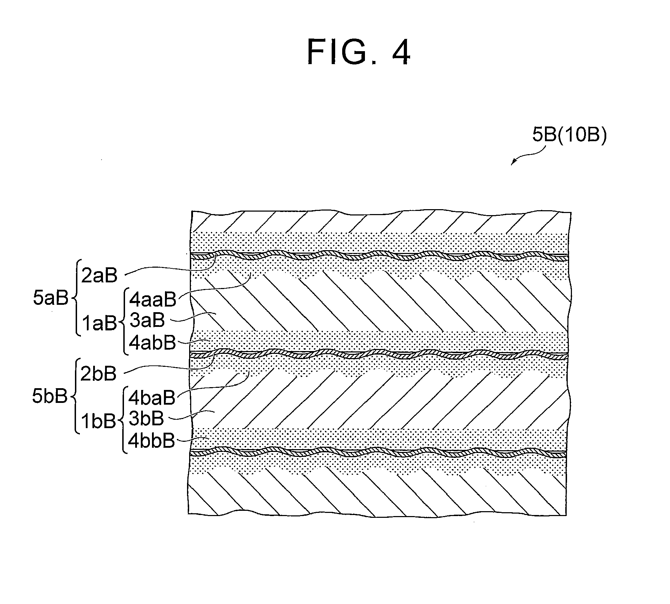

(Third Embodiment) FIG. 4 is a longitudinal sectional view showing the internal configuration of a film capacitor according to a third embodiment of the invention. A film capacitor 10B according to the third embodiment of the invention shown in FIG. 4 is different from the film capacitors 10 and 10A according to the first and second embodiments of the invention shown in FIGS. 1 to 3 in the internal structure of the dielectric films, and is substantially identical to the film capacitors 10 and 10A according to the first and second embodiments of the invention in other configurational details. Accordingly, detailed description of the configuration identical to those of the film capacitors 10 and 10A according to the first and second embodiments of the invention will be omitted.

In the third embodiment of the invention, each of dielectric films 1aB and 1bB constituting a stacked body 5B of the film capacitor 10B includes a high dielectric layer 3aB or 3bB that has a relatively high content (a relatively high content percentage) of a high dielectric filler (i.e., the high dielectric layer 3aB or 3bB that has high electric permittivity), and two low dielectric layers 4aaB or 4baB and 4abB or 4bbB that have a relatively low content (a relatively low content percentage) of the high dielectric filler or that do not contain the high dielectric filler (i.e., the two low dielectric layers 4aaB or 4baB and 4abB or 4bbB that have low electric permittivity). One of the low dielectric layers 4aaB or 4baB is provided between the high dielectric layer 3aB or 3bB and the metal electrode 2aB or 2bB (i.e., one of the low dielectric layers 4aaB or 4baB is provided in the surface side of the dielectric film 1aB or 1bB). The other low dielectric layer 4abB or 4bbB is provided on the outermost surface of the high dielectric layer 3aB or 3bB, the outermost surface being located on the side opposite to the metal electrode 2aB or 2bB (in other words, the other low dielectric layer 4abB or 4bbB is provided on the opposite side of the high dielectric layer 3aB or 3bB from the metal electrode 2aB or 2bB, i.e., the other low dielectric layer 4abB or 4bbB is provided in the reverse surface side of the dielectric film 1aB or 1bB). That is, each of the dielectric films 1aB and 1bB has a triple-layer structure consisting of the low dielectric layer 4abB or 4bbB, the high dielectric layer 3aB or 3bB, and the low dielectric layer 4aaB or 4baB, which are arranged in this order from the reverse surface side (the side opposite to the metal electrode 2aB or 2bB that is formed on the surface of the dielectric film 1aB or 1bB).

In the film capacitor 10B according to the third embodiment of the invention (produced by stacking metalized films 5aB and 5bB including the dielectric films 1aB and 1bB), although the electric permittivity of the dielectric film 1aB or 1bB itself may decrease, it is possible to obtain the effects of both the film capacitor 10 according to the aforementioned first embodiment of the invention and the film capacitor 10A according to the aforementioned second embodiment of the invention. Therefore, it is possible to more effectively reduce the air gap generated between the metalized films adjacent to each other, and accordingly, it is possible to more reliably ensure a desired capacitance.

(Experiment of Measuring Occurrence Ratio of Capacitance of each Film Capacitor as Test Specimen, and Result thereof) The inventors produced a plurality of test specimens that are different from each other in the internal structure of dielectric films (examples 1 to 5 and a comparative example), and carried out a measurement of the occurrence ratio of capacitance for each of the test specimens.

(Method of Producing Film Capacitors as Test Specimens) A method of producing each of the film capacitors as the test specimens according to the examples 1 to 5 will be outlined. First of all, the inventors formed a low dielectric layer by applying a solution of polyvinylidene fluoride (polyvinylidene difluoride (PVDF)), which did not contain a high dielectric filler, onto a base material, and drying the PVDF solution. Subsequently, the inventors formed a high dielectric layer by applying slurry, which was obtained by dispersing barium titanate in the PVDF solution, onto the dried low dielectric layer, thereby producing a dielectric film having a double-layer structure (consisting of the low dielectric layer in the reverse surface side and the high dielectric layer in the surface (the dried surface) side). Subsequently, the inventors formed metal electrodes by vapor-depositing aluminum on the surfaces (the dried surfaces) of the high dielectric layers of the dielectric films, thereby producing metalized films constituting positive electrodes and negative electrodes. Subsequently, the inventors formed a substantially rectangular stacked body (see FIG. 2) by stacking the metalized films constituting the positive electrodes and the metalized films constituting the negative electrodes such that the metalized films constituting the positive electrodes and the metalized films constituting the negative electrodes were disposed in positions different from each other and end portions (electrode extraction end portions) of the metalized films constituting the positive electrodes and the metalized films constituting the negative electrodes were provided to protrude on mutually opposite sides. Then, the inventors produced the film capacitor (see FIG. 1) by thermal-spraying a molten metal made of zinc onto both opposed lateral portions of the stacked body such that external electrodes were formed through adhesion of the molten metal to the surfaces of the electrode extraction end portions. It should be noted herein that the thicknesses of the low dielectric layers according to the examples 1 to 5 were 2.5%, 5.0%, 10.0%, 15.0% and 20.0% of the overall thicknesses of the respective dielectric films.

A method of producing a film capacitor as a test specimen according to the comparative example will be outlined. First of all, the inventors produced a dielectric film with a single-layer structure by applying slurry, which was obtained by dispersing barium titanate in a PVDF solution, onto a base material, and drying the PVDF solution. Subsequently, the inventors produced metalized films constituting positive electrodes and negative electrodes by forming metal electrodes through vapor deposition of aluminum on the surfaces of the dielectric films. Subsequently, the inventors formed a substantially rectangular stacked body by stacking the metalized films constituting the positive electrodes and the metalized films constituting the negative electrodes such that the metalized films constituting the positive electrodes and the metalized films constituting the negative electrodes were disposed in positions different from each other and end portions (electrode extraction end portions) of the metalized films constituting the positive electrodes and the metalized films constituting the negative electrodes were provided to protrude on mutually opposite sides. Then, the inventors produced the film capacitor by thermal-spraying a molten metal made of zinc onto both opposed lateral portions of the stacked body such that external electrodes were formed through adhesion of the molten metal to the surfaces of the electrode extraction end portions.

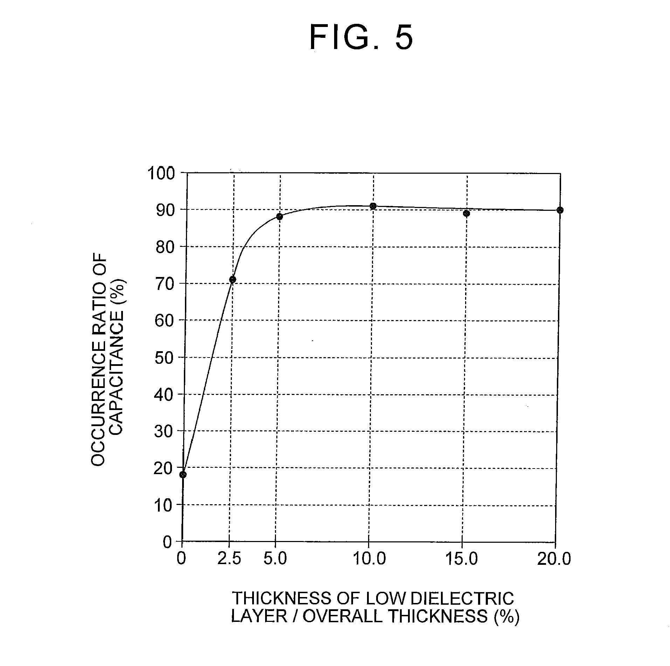

(Result of Measurement on Occurrence Ratio of Capacitance of each Film Capacitor as Test Specimen) FIG. 5 and Table 1 below show a relationship between the thickness of the low dielectric layer of each film capacitor as a test specimen and the occurrence ratio of capacitance. The occurrence ratio of capacitance is the ratio of a measured capacitance to a theoretical capacitance (the measured capacitance/the theoretical capacitance x 100), and indicates the ratio of the capacitance measured after application of 500 V to the theoretical capacitance in this case.

**(Table 1)**

| | Thickness of Low Dielectric Layer/Overall Thickness (%) | Occurrence Ratio of Capacitance (%) |
|---|---|---|
| Comparative Example | 0 | 18 |
| Example 1 | 2.5 | 71 |
| Example 2 | 5.0 | 88 |
| Example 3 | 10.0 | 91 |
| Example 4 | 15.0 | 89 |
| Example 5 | 20.0 | 90 |

As shown in FIG. 5 and Table 1, it was confirmed that in the examples 1 to 5, the occurrence ratio of capacitance was substantially (greatly) improved in comparison with the comparative example. In particular, it was confirmed that in the examples 2 to 5 in each of which the thickness of the low dielectric layer was equal to or larger than 5.0% of the overall thickness of the dielectric film, the occurrence ratio of capacitance was increased to approximately 90%.

This experimental result shows that a desired capacitance can be ensured with the simple configuration in which each of the dielectric films includes the high dielectric layer that has a high content of the high dielectric filler and the low dielectric layer that does not contain the high dielectric filler, and the relatively flexible low dielectric layer is provided on the outermost surface of the high dielectric layer, the outermost surface being located on the side opposite to the metal electrode (in other words, the relatively flexible low dielectric layer is provided on the opposite side of the high dielectric layer from the metal electrode, i.e., the low dielectric layer is provided in a contact portion in the reverse surface side of the dielectric film, the contact portion being in contact with the metal electrode that is formed on the surface of the adjacent dielectric film).

Although the embodiments of the invention have been described in detail using the drawings, the concrete configuration should not be limited to these embodiments of the invention. Any design modification and the like within the scope of the invention may be included in the invention.

## Claims

1. A film capacitor that is formed by stacking metalized films (5a, 5b; 5aA, 5bA; 5aB, 5bB) in a thickness direction, wherein in each of the metalized films (5a, 5b; 5aA, 5bA; 5aB, 5bB), a metal electrode (2a, 2b; 2aA, 2bA; 2aB, 2bB) is formed on a surface of a dielectric film (1a, 1b; 1aA, 1bA; 1aB, 1bB), **characterized in that**:
the dielectric film (1a, 1b; 1aA, 1bA; 1aB, 1bB) includes a high dielectric layer (3a, 3b; 3aA, 3bA; 3aB, 3bB) that has a relatively high content of a high dielectric filler, and a low dielectric layer (4a, 4b; 4aA, 4bA; 4aaB, 4baB, 4abB, 4bbB) that has a relatively low content of the high dielectric filler or that does not contain the high dielectric filler; and
the low dielectric layer (4a, 4b; 4aA, 4bA; 4aaB, 4baB, 4abB, 4bbB) is provided in at least one of a position between the high dielectric layer (3a, 3b; 3aA, 3bA; 3aB, 3bB) and the metal electrode (2a, 2b; 2aA, 2bA; 2aB, 2bB), and a position on an opposite side of the high dielectric layer (3a, 3b; 3aA, 3bA; 3aB, 3bB) from the metal electrode (2a, 2b; 2aA, 2bA; 2aB, 2bB).

2. The film capacitor according to claim 1, wherein:
the metal electrode (2a, 2b) is provided on a surface of the high dielectric layer (3a, 3b); and
the low dielectric layer (4a, 4b) is provided on another surface of the high dielectric layer (3 a, 3b) on which the metal electrode (2a, 2b) is not provided.

3. The film capacitor according to claim 1, wherein:
the dielectric film (1aA, 1bA) has a double-layer structure consisting of the high dielectric layer (3aA, 3bA) and the low dielectric layer (4aA, 4bA); and
the low dielectric layer (4aA, 4bA) is provided between the high dielectric layer (3aA, 3bA) and the metal electrode (2aA, 2bA).

4. The film capacitor according to claim 1, wherein:
the dielectric film (1aB, 1bB) has a triple-layer structure consisting of the high dielectric layer (3aB, 3bB) and the two low dielectric layers (4aaB, 4baB, 4abB, 4bbB); and
one (4aaB, 4baB) of the low dielectric layers (4aaB, 4baB, 4abB, 4bbB) is provided between the high dielectric layer (3aB, 3bB) and the metal electrode (2aB, 2bB), and the other (4abB, 4bbB) of the low dielectric layers (4aaB, 4baB, 4abB, 4bbB) is provided on the opposite side of the high dielectric layer (3aB, 3bB) from the metal electrode (2aB, 2bB).

5. The film capacitor according to any one of claims 1 to 4, wherein a plurality of pairs of the metalized films (5a, 5b; 5aA, 5bA; 5aB, 5bB) are superimposed on each other or a pair of the metalized films (5a, 5b; 5aA, 5bA; 5aB, 5bB) is wound such that the metalized films (5a, 5b; 5aA, 5bA; 5aB, 5bB) are stacked in the thickness direction.
